# EUROPEAN PATENT SPECIFICATION

(11) **EP 3 746 205 B1**
(45) Date of publication and mention of the grant of the patent: **25.08.2021**
(21) Application number: 19701679.3
(22) Date of filing: 31.01.2019
(51) Int. Cl.: B01D 25/164, B01D 25/21

(54) **METHOD OF MANUFACTURING A FILTER PRESS PLATE OF THE IMPROVED TYPE WITH SELF-CLEANING SURFACE AND ASSOCIATED FILTER PRESS PLATE**
VERFAHREN ZUR HERSTELLUNG EINER VERBESSERTEN FILTERPRESSPLATTE MIT SELBSTREINIGENDER OBERFLÄCHE UND ZUGEHÖRIGE FILTERPRESSPLATTE
PROCÉDÉ DE FABRICATION D'UNE PLAQUE DE FILTRE-PRESSE DE TYPE AMÉLIORÉ À SURFACE AUTONETTOYANTE ET PLAQUE DE FILTRE-PRESSE ASSOCIÉE

(30) Priority: 02.02.2018 IT 201800002350
(43) Date of publication of application: 09.12.2020
(73) Proprietor: Diemme Soil Washing S.R.L., 48022 Lugo (RA) (IT)
(72) Inventor: MELANDRI, Primo, 48022 Lugo (RA) (IT); TABANELLI, Alessandra, 48022 Lugo (RA) (IT)
(74) Representative: Antonucci, Emanuele
(86) International application number: PCT/EP2019/052319
(87) International publication number: WO 2019/149793

(56) References cited:
- EP-A1- 1 759 752
- DE-A1- 1 536 815
- DE-C- 960 451
- FR-A- 939 957
- GB-A- 797 880
- GB-A- 1 392 030
- GB-A- 2 282 977
- US-A- 2 849 121

## Description

### Field of application

The present invention relates to a method of manufacturing a filter press plate, and to the filter press plate itself.

The aforementioned plate therefore has a useful application in the various industrial sectors which make use of the aforementioned filter press machines, for example the processing, wastewater or water treatment sector, the chemical/pharmaceutical sector and the mining sector.

### Prior art

The filter press is an industrial apparatus for discontinuous filtration which is widely used, in particular for the extraction of the liquid phase from homogeneous mixtures with a main solid phase (sludges).

The filter presses known in the art, which may differ from each other also considerably in terms of both dimensions and technical details and intended use, all have a similar structure and the same operating principle.

The structure comprises a series of plates (plate pack) guided by longitudinal sliding members and designed to be kept in a packed position by a hydraulic jack. Each plate has two concave faces, namely two symmetrically opposite surfaces lined with a filter cloth, which form, between one plate and another, a filtration chamber bounded by the filter cloths.

During operation of the filter press, a two-phase liquid/solid material such as a sludge is sucked in by a pumping station and forced inside each chamber via special inlet openings, so as to fill it.

As the material is pushed under pressure inside the different chambers bounded by the filter cloths, the liquid phase is gradually pushed beyond the interface of the said cloth which retains instead the solid particles. In the different chambers, therefore, cakes of solid material are formed and these may be extracted from the opening of the filter press, while the filtered liquid phase may be collected by a special hydraulic line.

As already mentioned above, the filter press plates known in the sector are therefore defined by a panel characterized by two opposite surfaces which may be a mirror image of each other and substantially concave and are perimetrally surrounded by a frame projecting from both the surfaces.

These plates, which are conventionally made of a single rigid material (in general polypropylene), have been recently redesigned by one of the inventors mentioned in the present application, Primo Melandri, which has come up with the idea of using a flexible partition wall made of elastomer reinforced inside a rigid matrix. This innovation, which is described and claimed in Italian patent application 102017000092724 (subject to secrecy at the date of priority of the present application), has introduced some important advantages in the prior art; above all a substantial reduction in the dimensions of the plate.

Moreover, even in their improved version, the filter press plates continue to have a number of drawbacks which hitherto remain unsolved; one of these consists in the need for periodic and frequent washing of the plate pack.

In fact, even if the filter cloth retains most of the solid particles, a minimum quantity of these (for example marble dust in the stone sector) pass through the filter together with the liquid phase, being thus deposited on the inner plate of the plate pack.

The adhesion of these residues, which is a well-known problem affecting polypropylene plates, may also be observed in the case of the new elastomer plates where the surface has drainage profiles similar to those which are conventionally employed in the sector.

Periodic washing or cleaning of the plates therefore often becomes indispensable, with an increase in the production costs associated with the labor used and the necessary downtime of the machine.

Filter press plates according to the prior art are disclosed in FR 939 957 A, DE 960 451 C and EP 1 759 752 A1.

The technical problem underlying the present invention is therefore that of devising a filter press plate which does not require periodic washing or cleaning operations or which requires less frequent and/or less thorough washing and cleaning operations than the plates of the prior art.

### Summary of the invention

The proposed solution forming the basis of the present invention is that of structuring the surface of the plate so as provide it with self-cleaning properties, namely properties which prevent as far as possible the deposition of solid residues, favoring the conveying thereof towards the collection channels by the liquid passing through the filter cloth.

The provision of said structured, or textured, surface requires a dedicated manufacturing method.

Therefore, the aforementioned technical problem is solved by a method of manufacturing a filter press plate according to claim 1 and a filter press plate according to claim 6.

Note that the step of impressing a textured surface and the step of curing the half-processed partition are preferably simultaneous.

It has been found that the above-mentioned impression die is a textile sheet. An alternative possibility, outside the scope of the present invention, is the use of a textured metal panel.

The textile sheet has to be replaced over a limited number of working cycles, while the textured metal panel has a higher manufacturing cost but a longer service life.

The metal panel also yields enhanced precision and repeatability of the impressed profile over its textile counterpart.

The steps of impressing a textured surface and curing the half-processed partition wall may be carried out by placing the half-processed partition wall in a press and/or in an autoclave.

In a first embodiment, two impression dies are provided, the impression dies being placed against both faces of the half-processed partition wall during the step of impressing a textured surface.

In an alternative embodiment, a single face is impressed during the step of impressing a textured surface, the method further comprising a step of joining two partition walls back to back with their textured surfaces facing outwards before coupling them to a peripheral frame to define the filter press plate.

The technical problem is also solved by a filter press plate manufactured according to the above-described method. Such a filter press plate, adapted to be interposed during use between adjacent plates of a plate pack defining, along with these plates, an upstream filtering chamber and a downstream filtering chamber; may comprise the following features:
a - preferably solid - partition wall that separates during use said upstream filtering chamber from said downstream filtering chamber, said partition wall having a first face facing during use said upstream chamber, and a second face, opposite to the first face, facing during use said downstream filtering chamber;
a frame placed peripherally in relation to said partition wall and projecting with respect to at least one of said first face and second face of said partition wall, said frame being adapted to be arranged, during use, in contact with the adjacent plates of the plate pack;
wherein at least one of the said first face and said second face - and preferably both of them - has/have a textured or structured surface with self-cleaning properties.

The aforementioned textured surface is characterized preferably by a complex structure - in particular one which significantly resembles a fractal structure - which, in the dynamic condition defined by the albeit minimum inflections of the partition wall, has marked hydrophobic or non-adhesive properties as regards the filtered residue, with a consequent self-cleaning action on the plate. It is considered in particular that the complex morphology defines a reduced contact surface which allows the water and the residual dirt to roll away from the partition without in any way adhering thereto (or adhering thereto in a limited manner) and the removal of any solid particles which have permeated through the filtering partition.

In the last few years, several studies - both theoretical and experimental - have shown that complex surfaces close to fractal surfaces exhibit enhanced hydrophobic values.

If the textured surface is to be characterized by a complexity indicator, it is possible to measure the fractal dimension thereof (using currently known image processing programs which use, for example, the box counting method) which will be higher than 2 and less than 3. A fractal dimension value higher than 2 and less than 3 will always be obtained using the different dimensions given to the fractal dimension, preferably the Hausdorff dimension; or else Minkowski-Bouligand dimension, Rényi dimension or packing dimension.

The textured surface which ensures the self-cleaning properties may have first main grooves and second main grooves, intersecting each other so as to isolate projections.

At least some of said first or second main grooves have an inner surface further segmented so as to define secondary grooves, where said secondary grooves have a relationship of substantial similarity with the respective main grooves (i.e.: the secondary groove have the same shape, to scale, of the primary grooves).

The self-similarity property characteristic of fractal structures is therefore defined, at least with a certain degree of detail.

More generally, the textured surface has a main extension defined by first recesses (grooves, depressions, blind holes, etc.) with respect to a surface plane and at least one secondary extension defined by recesses similar to the first recesses (on a smaller scale obviously) with respect to the profile of the main extension. These extended forms help ensure the liquid drainage function and, likewise, the form of the projections ensures the self-cleaning action or low adhesion of the dirt.

The partition wall is preferably made of flexible material, even more preferably multi-layered elastomeric material or composite material, comprising a matrix made of elastomeric material and a reinforcement material, said textured surface being formed on the elastomeric material.

The inventors have in fact determined how a relatively complex geometry provided with the aforementioned self-cleaning properties may be easily obtained on an elastomeric matrix.

Surprisingly the inventors have also identified on the market, at the time of filing of the present invention, reinforced-elastomer articles already provided with the desired textured surface. More specifically, these articles consist of rubberized fabric belts produced for use as a conveyor belt, provided on the top with a surface having an increased friction. These belts are currently referred to using an imprecise expression which has become established in Italian specialist terminology, i.e. "honeycombed"; instead in Anglo-Saxon specialist terminology they are most commonly referred to as being "rough top" or "grip top".

In any case, the surface geometry of "rough top" conveyor belts suitable for the present invention has an intersection of main grooves, with rough and apparently irregular surfaces. The surface of the grooves, if viewed on a suitably larger scale, in turn appears to have grooves which are similar to the main grooves, so as to define a fractal type geometry, at least at a first glance.

Purely by way of example, conveyor belts which have the geometric characteristics required for the invention are the belts of the "FLATBEL-N" series which are marketed, at the time of filing of the present application, by the one-man Italian company Lavorgomma S.r.l., and have characteristics which may be measured with reference to the technical standard DIN 22102 "belts with one or more plies of woven textile fabric".

The inventors have seen how, in the novel context of a filter press plate, partition walls provided with an elastomeric surface having a surface finish entirely similar to that of said conveyor belts result in a drastic reduction in the amount of adhesive solid residue at the end of the filtering operations, without however causing any damage to the filter cloths which are commonly applied on top of the plates and which form the solid/liquid separation filtering element.

As previously discussed, the textured surface of the partition wall made of elastomeric material is obtained, in a manner known per se in the aforementioned technological sector of conveyor belts, by the application of a mold of textile material (previously defined as an impression die) during a step for molding the elastomeric material, and by the subsequent removal of said mold. The mold, which consists for example of a cloth interwoven with large diameter yarns, may be applied onto the elastomer during a heat-forming step or during a vulcanization process.

Further characteristic features and advantages will emerge more clearly from the detailed description provided hereinbelow of a preferred, but not exclusive embodiment of the present invention, with reference to the attached figures, provided by way of a non-limiting example.

### Brief description of the drawings

Figure 1 shows a front view of a filter press plate in accordance with the present invention.
Figure 2 shows a cross-sectional view along the plane K-K of the filter press plate according to Figure 1.
Figure 3 shows a side view of the filter press plate according to Figure 1.
Figure 4 shows a cross-sectional view along the plane H-H of the side view of Figure 3.
Figure 5 shows a front view of the partition wall of the filter press plate according to Figure 1.
Figure 6 shows a side view of the partition according to Figure 5.
Figures 7-13 show corresponding photographs, to scale, of the textured surface of the partition wall according to Figure 5.

### Detailed description

With reference to the attached figures, 1 denotes generally a filter press plate according to the present invention, suitable for use in industrial filter presses for solid/liquid separation. The description below is provided with non-limiting reference to use in the context of such an application.

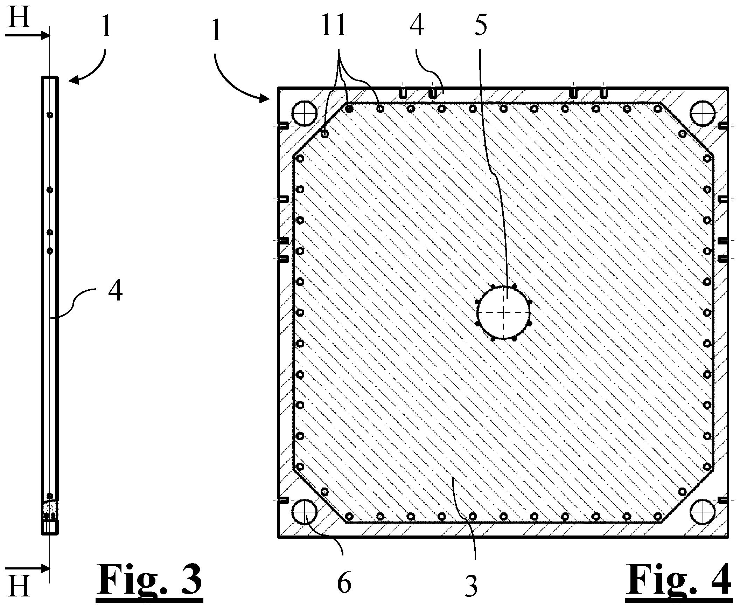

The plate 1 is essentially formed by a partition wall 3 or central panel which has a first face 3a parallel and opposite to a second face 3b. The partition 3 is perimetrally surrounded by an outer frame 4 projecting laterally with respect to both the first face 3a and the second face 3b of the partition 3. As can be noted from Figure 4, the frame 4 comprises a first side surface 4a which is parallel to the first face 3a of the partition 3 to which it is connected by means of an inclined portion, and a second side surface 4b which is parallel to the second face 3b of the partition to which it is connected, again by means of a second inclined portion. The inclined portions together with the respective faces 3a, 3b therefore define a concavity or recess with respect to the respective side surfaces 4a, 4b of the frame 4.

The filter press plate 1 is designed to form part of a pack of plates used in a filter press in which at least one plate of the pack, preferably all of these plates, is formed according to the present invention.

The concavities or recesses described above help form respectively a first or second filtering chamber or a downstream filtering chamber and an upstream filtering chamber, when the filter press plate 1 is arranged, so as to make contact, between two other filter press plates 1 in the plate pack.

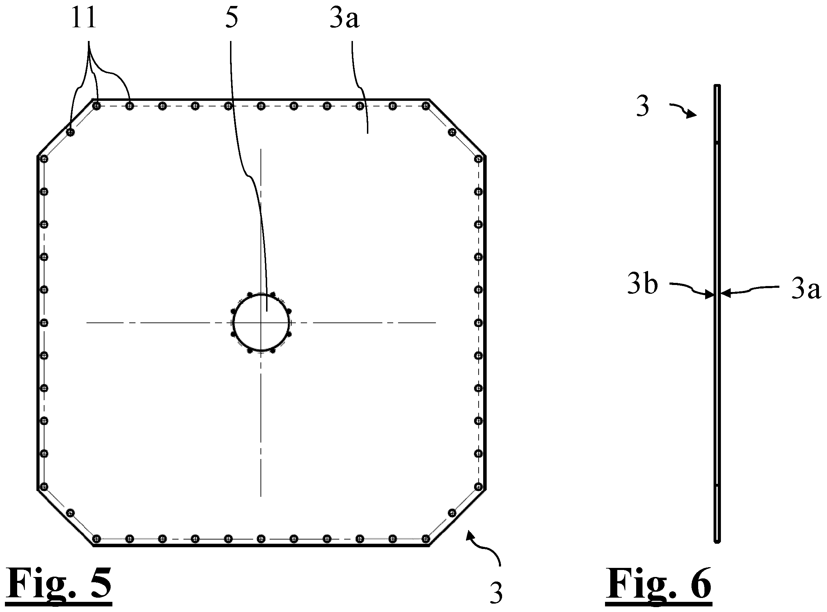

With reference to Figures 5 and 6, the characteristics of the partition wall 3 will now be described in greater detail.

As can be noted from Figure 5, which shows a front view of the first face 3a, the partition 3 has a substantially square form with chamfered corners and a plurality of fixing holes 11, which facilitate fixing of the partition 3 to the frame 4, are aligned along the perimeter of the partition 3. In the center of the partition 3, instead, there is a circular feed through-hole 5 necessary for supplying the product to be filtered into the filtering chambers.

The faces 3a, 3b are both characterized by a textured surface 10 with self-cleaning properties, as described in detail below. The textured surface 10, which has a complex and grooved geometry, allows the outflow of the filtered liquid through the filter cloth towards the periphery of the partition wall 3 so as to be able to be collected by means of outlet openings 30 flowing into channels formed in the frame 4.

The partition 3 is advantageously formed by a sheet of rubberized fabric, namely a composite material in which one or more layers of fabric, preferably polyester, are lined with rubber. In order to withstand the pressures which are generated inside the filtering chambers, the partition 3 has a thickness of between 2 and 25 mm, preferably between 3.5 and 15 mm, and ideally equal to 12 mm. This ideal value in particular relates to a square plate with a side dimension of 1500 mm; this is of course an indicative value which may vary widely for example depending on the operating pressure envisaged and the type of product to be filtered.

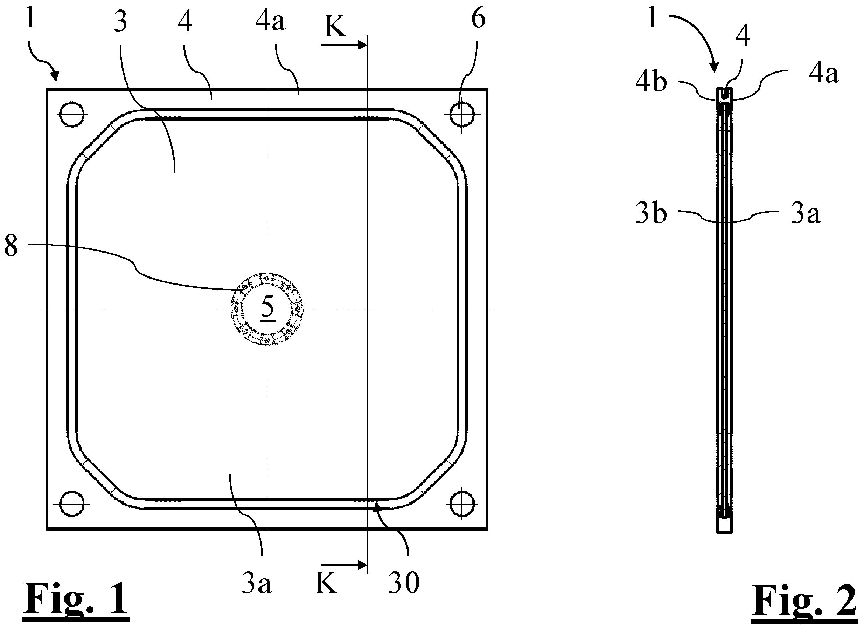

As can be noted from Figures 1 and 2, a distribution sleeve 8 may be fixed directly on both faces 3a, 3b in the vicinity of the supply through-hole 5 and in fluid communication with the latter. Instead of or in addition to the distribution sleeve 8, a plurality of buttons or bosses made of rigid material, for example polypropylene, may be associated, being raised with respect to the sheet of rubberized fabric.

The frame 4 of the plate 1 has a substantially square shape and a greater thickness than the partition 3. Moreover, the frame 4 is made of a rigid, preferably thermoplastic material such as polypropylene.

The four corners of the frame 4 are provided with a corresponding number of collection through-channels 6, in fluid communication with the aforementioned outlet openings 30. When the filter press plate 1 is arranged alongside the adjacent filter press plate, in contact therewith, within the plate pack of a filter press, the collection channels 6 of one plate coincide and are in fluid communication with the corresponding collection channels of the adjacent plates. In this way they form a duct extending transversely with respect to the plates for draining the liquid which has filtered into the filtering chambers.

The filter press plate 1 may obviously be made in various sizes depending on the dimensions of the filter press and therefore the volume amount of material to be processed during a machine working cycle.

The characterizing aspect of the present invention relates to the textured surface 10 which is defined on both faces 3a, 3b of the partition wall 3.

The textured surface 10 is preferably formed initially during the process for manufacturing the sheet of rubberized fabric, which is then cut to size in order to define the partition wall 3 and finally fixed to the frame 4.

In the rubberized fabric sheet article, in a known manner one or more reinforcing layers are embedded within an elastomeric matrix; the textured surface 10 is then formed on the two sides of this matrix during a successive or simultaneous step.

The textured surface may be formed, for example, using as a mold for the elastomeric material before hardening, a textile mold, for example a mesh of large-diameter yarns. The structure itself of the yarn, consisting of a set of smaller-diameter textile fibers, may define a complex geometry which is comparable to a fractal structure. Surprisingly this structure, when used in the dynamic context defined by the inflections due to load acting on the partition wall 3 of a filter press plate, has optimum hydrophobic properties which facilitate drainage of the liquid phase and removal, together therewith, of the solid residues which may have passed through the filter cloth.

Obviously, a similar geometry of the textured surface 10 may be obtained with manufacturing systems different from that mentioned above.

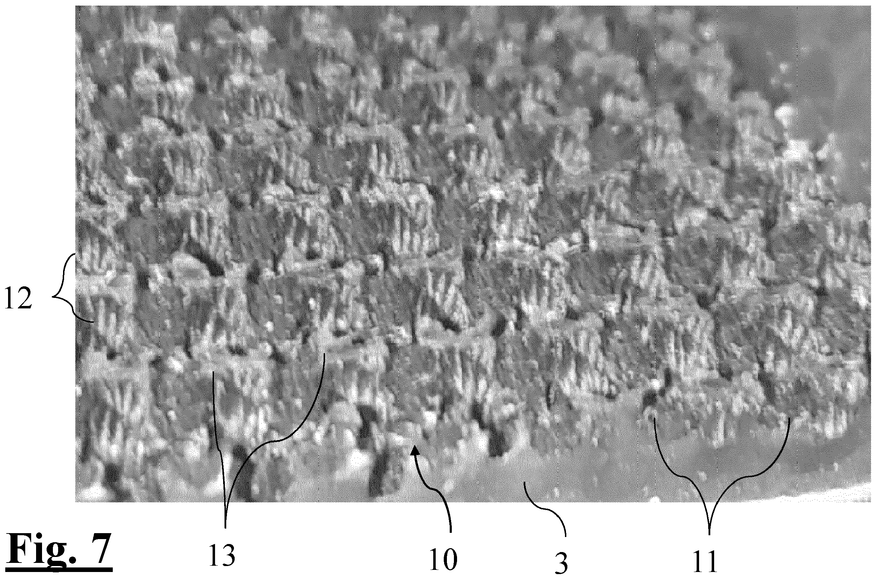

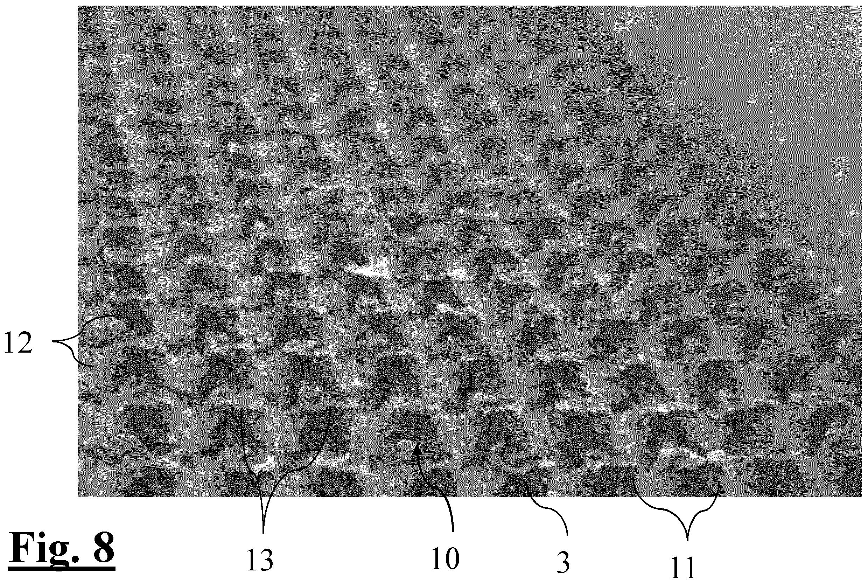

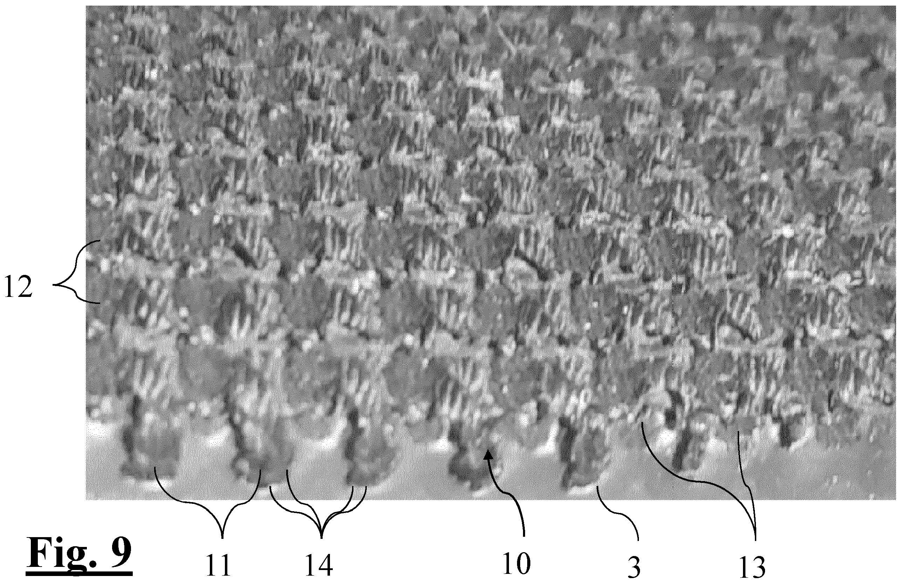

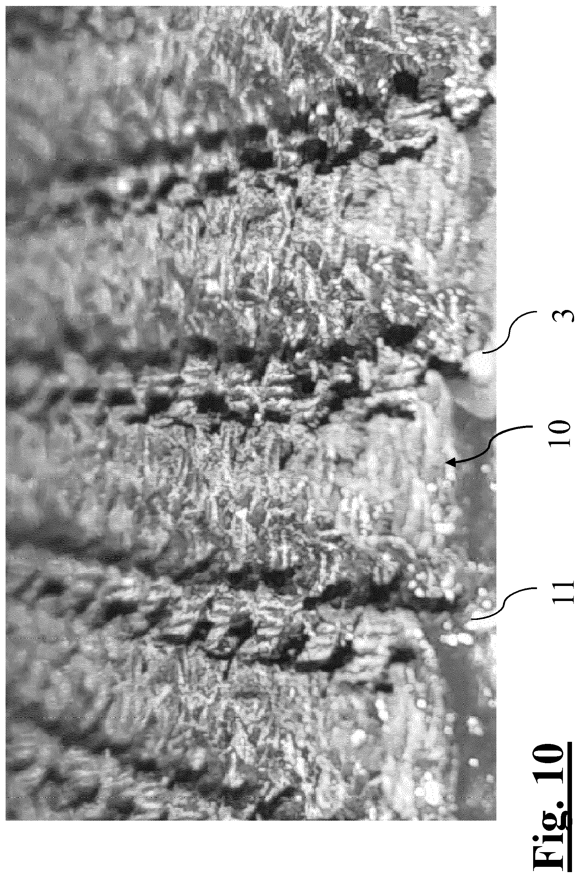

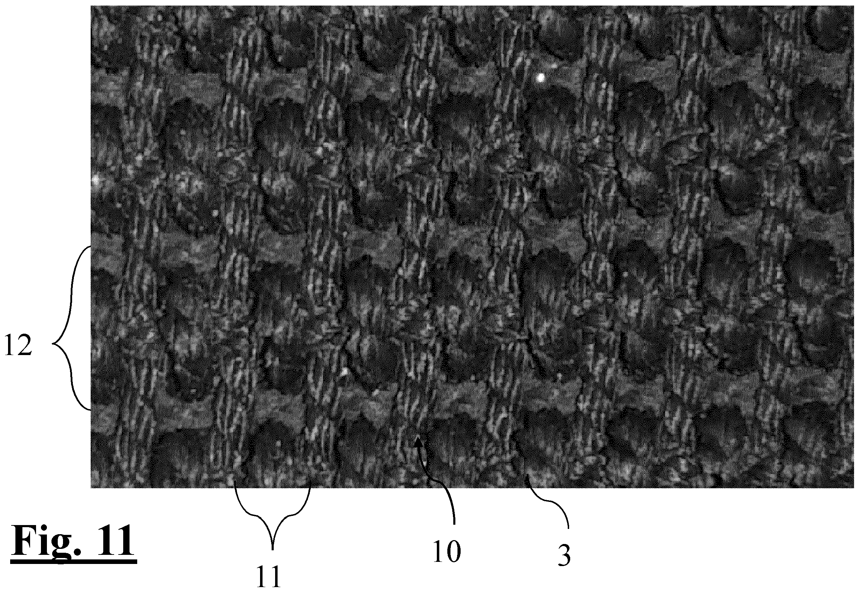

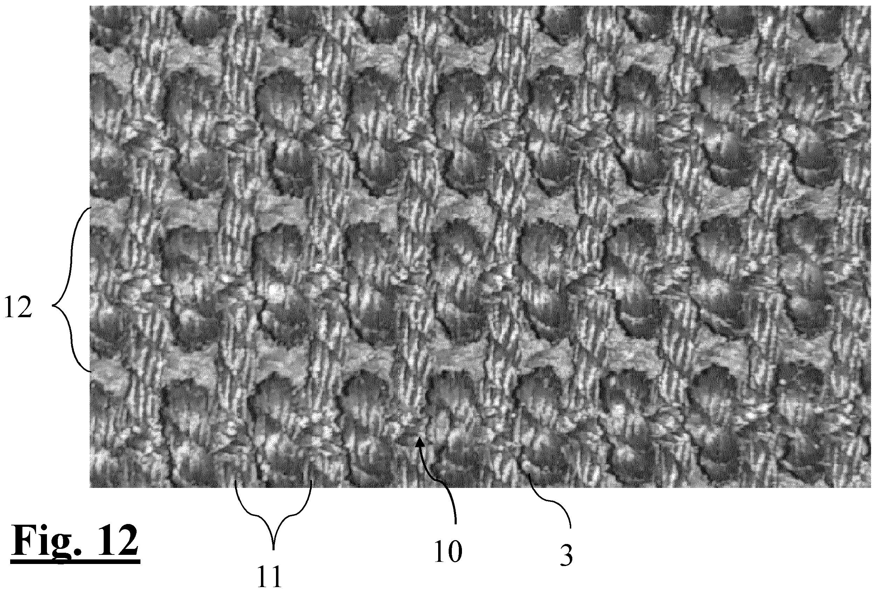

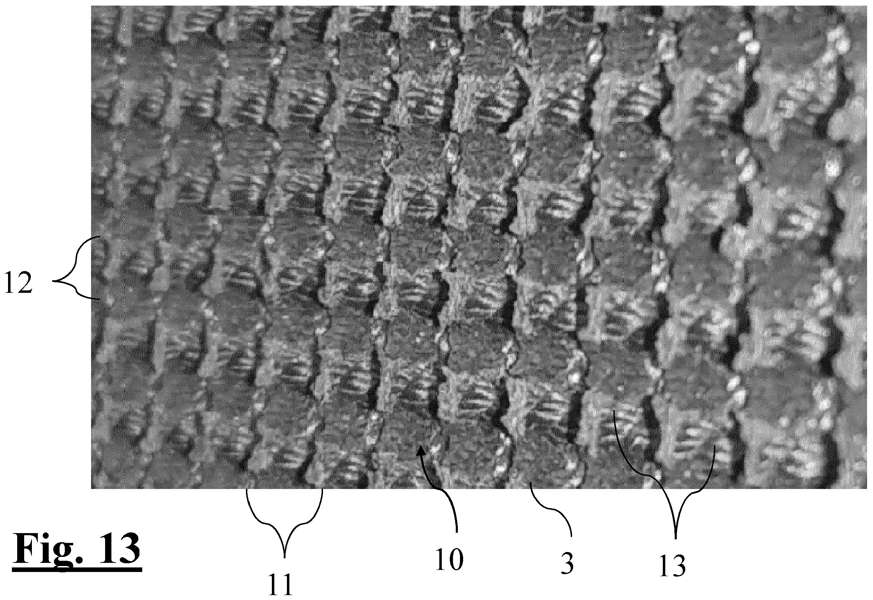

The textured surface 10, as can be seen in the photographs of Figures 7-13, has at first sight a high complexity and a geometry which is at least roughly comparable to a fractal surface.

In particular, said textured surface 10 has first main grooves 11 intersecting - preferably at right-angles - second main grooves 12. The intersection of said main grooves 11, 12 isolates elastomeric projections 13 which appear raised with respect to the depressions which occupy most of the area of the surface 10.

The concave surface of the depressions appears to be more jagged, namely has further grooves and/or recesses. In particular, secondary grooves 14, which are substantially similar to the main larger-size grooves 11, 12, may be identified.

The use of the textured surface 10 described above within a filter press plate 1 gives rise to surprising experimental results. The surface in fact, after a working cycle of the filter press, has a clean appearance, i.e. does not have any solid deposits; on the other hand, a working cycle (carried out using the same material to be filtered) results in large accumulations on plates with a conventional non-fractal geometry, namely plates formed with grooved or pointed structures which do not have further indentations with respect to a primary extension.

The invention therefore achieves an important economic advantage, limiting the usual costs associated with the plate washing operations and the respective machine downtimes.

Another advantage of the plate according to the invention consists in the possibility of production at extremely competitive rates, using manufacturing methods already tried-and-tested in other goods sectors, in particular the conveyor belt sector.

Obviously a person skilled in the art, in order to satisfy any specific requirements which might arise, may make numerous modifications and variations to the invention described above, all of which are contained moreover within the scope of protection of the invention, as defined by the following claims.

## Claims

1. Method of manufacturing a filter press plate (1), adapted to be interposed during use between adjacent plates of a plate pack defining, along with said plates, an upstream filtering chamber and a downstream filtering chamber, said method comprising the steps of:
providing a sheet of reinforcement material lined on both sides by an elastomeric material, to define a half-processed partition wall of the filter press plate (1);
providing at least one impression die;
impressing a textured surface on at least a face of the partition wall, by placing the at least one impression die against the corresponding face of the half-processed partition wall and pressing them together;
curing the half-processed partition wall in order to obtain a partition wall (3) with at least one of a first face (3a) or a second face (3b) having a textured surface (10);
coupling said partition wall (3) to a peripheral frame (4) made of rigid material so as to define the filter press plate (1);
wherein the impression die is a textile sheet.

2. Method according to claim 1, wherein the step of impressing a textured surface and the step of curing the half-processed partition are simultaneous.

3. Method according to one of the preceding claims, wherein said steps of impressing a textured surface and curing the half-processed partition wall are carried by placing the half-processed partition wall in a press and/or in an autoclave.

4. Method according to one of the preceding claims, wherein two impression dies are provided, the impression dies being placed against both faces of the half-processed partition wall during the step of impressing a textured surface.

5. Method according to claims 1-3, wherein a single face is impressed during the step of impressing a textured surface, the method further comprising a step of joining two partition walls (3) back to back with their textured surfaces facing outwards before coupling them to a peripheral frame (4) to define the filter press plate.

6. Filter press plate (1) adapted to be interposed during use between adjacent plates of a plate pack defining, along with said plates, an upstream filtering chamber and a downstream filtering chamber; said filter press plate (1) comprising a partition wall (3) coupled to a peripheral frame (4) made of rigid material; wherein said partition wall (3) comprises a sheet of reinforcement material lined on both sides by an elastomeric material; wherein at least a face of the partition wall (3) has a textured surface; wherein said textured surface is obtained by pressing an impression die being a textile sheet against the corresponding face of the half-processed partition wall (3) and curing the half-processed partition wall (3).

7. Plate (1) according to claim 6, wherein said textured surface (10) has a fractal dimension, measured according to Hausdorff definition, higher than 2 and lower than 3.

8. Plate (1) according to one of claims 6 or 7, wherein said textured surface (10) has first main grooves (11) and second main grooves (12), intersecting each other so as to isolate projections (13).

9. Plate (1) according to claim 8, wherein at least some of said first or second main grooves (11, 12) have an inner surface further segmented to define secondary grooves (14).

10. Plate (1) according to claim 9, wherein said secondary grooves (14) have the same shape, to scale, of the respective main grooves (11, 12).

## Patentansprüche

1. Verfahren zur Herstellung einer Filterpressenplatte (1), die ausgebildet ist, während des Gebrauchs zwischen benachbarten Platten eines Plattenpakets angeordnet zu werden, das zusammen mit den Platten eine stromaufwärts gelegene Filterkammer und eine stromabwärts gelegene Filterkammer definiert, wobei das Verfahren die folgenden Schritte umfasst:
Bereitstellen einer Platte oder eines Bogens aus Verstärkungsmaterial, die bzw. der auf beiden Seiten mit einem elastomeren Material beschichtet ist, um eine halbbearbeitete Trennwand der Filterpressenplatte (1) zu definieren;
Bereitstellen mindestens eines Prägestempels;
Einprägen einer texturierten Oberfläche auf mindestens eine Seite der Trennwand, indem der mindestens eine Prägestempel gegen die entsprechende Seite der halbbearbeiteten Trennwand platziert wird und sie zusammengedrückt werden;
Aushärten der halbbearbeiteten Trennwand, um eine Trennwand (3) mit mindestens einer von einer ersten Seite (3a) oder einer zweiten Seite (3b) mit einer texturierten Oberfläche (10) zu erhalten;
Koppeln der Trennwand (3) mit einem Umfangsrahmen (4) aus starrem Material, um die Filterpressenplatte (1) zu definieren;
wobei der Prägestempel eine Textilbahn ist.

2. Verfahren nach Anspruch 1, wobei der Schritt des Einprägens einer texturierten Oberfläche und der Schritt des Aushärtens der halbbearbeiteten Trennwand gleichzeitig erfolgen.

3. Verfahren nach einem der vorhergehenden Ansprüche, wobei die Schritte des Einprägens einer texturierten Oberfläche und des Aushärtens der halbbearbeiteten Trennwand durch Einbringen der halbbearbeiteten Trennwand in eine Presse und/oder in einen Autoklaven ausgeführt werden.

4. Verfahren nach einem der vorhergehenden Ansprüche, bei dem zwei Prägestempel vorgesehen sind, wobei die Prägestempel während des Schrittes des Einprägens einer texturierten Oberfläche gegen beide Seiten der halbbearbeiteten Trennwand angelegt werden.

5. Verfahren nach einem der Ansprüche 1 bis 3, wobei während des Schritts des Einprägens einer texturierten Oberfläche eine einzelne Seite eingeprägt wird, wobei das Verfahren ferner einen Schritt des Verbindens von zwei Trennwänden (3) Rücken an Rücken mit ihren nach außen gerichteten texturierten Oberflächen umfasst, bevor sie mit einem Umfangsrahmen (4) verbunden werden, um die Filterpressenplatte zu definieren.

6. Filterpressenplatte (1), die ausgebildet ist, während des Gebrauchs zwischen benachbarten Platten eines Plattenpakets angeordnet zu werden, das zusammen mit den Platten eine stromaufwärts gelegene Filterkammer und eine stromabwärts gelegene Filterkammer definiert; wobei die Filterpressenplatte (1) eine Trennwand (3) umfasst, die mit einem Umfangsrahmen (4) aus starrem Material verbunden ist; wobei die Trennwand (3) eine Platte oder einen Bogen aus Verstärkungsmaterial umfasst, die bzw. der auf beiden Seiten mit einem elastomeren Material beschichtet ist; wobei mindestens eine Seite der Trennwand (3) eine texturierte Oberfläche aufweist; wobei die texturierte Oberfläche durch Pressen eines Prägestempels, der eine Textilbahn ist, gegen die entsprechende Seite der halbbearbeiteten Trennwand (3) und Aushärten der halbbearbeiteten Trennwand (3) erhalten wird.

7. Platte (1) nach Anspruch 6, wobei die texturierte Oberfläche (10) eine fraktale Dimension, gemessen nach der Hausdorff-Definition, größer als 2 und kleiner als 3 hat.

8. Platte (1) nach einem der Ansprüche 6 oder 7, wobei die texturierte Oberfläche (10) erste Hauptrillen (11) und zweite Hauptrillen (12) aufweist, die sich miteinander schneiden, um Vorsprünge (13) zu isolieren.

9. Platte (1) nach Anspruch 8, wobei zumindest einige der ersten oder zweiten Hauptrillen (11, 12) eine Innenfläche aufweisen, die weiter segmentiert ist, um Sekundärrillen (14) zu definieren.

10. Platte (1) nach Anspruch 9, wobei die Sekundärrillen (14) maßstabsgetreu die gleiche Form wie die entsprechenden Hauptrillen (11, 12) aufweisen.

## Revendications

1. Procédé de fabrication d'une plaque de filtre-presse (1), adaptée pour être interposée en cours d'utilisation entre des plaques adjacentes d'un paquet de plaques définissant, avec lesdites plaques, une chambre de filtration amont et une chambre de filtration aval, ledit procédé comprenant les étapes consistant à :
fournir une feuille de matériau de renforcement revêtue des deux côtés d'un matériau élastomère, pour définir une paroi de séparation semi-traitée de la plaque de filtre-presse (1) ;
fournir au moins une matrice d'impression ;
imprimer une surface texturée sur au moins une face de la paroi de séparation, en plaçant ladite au moins une matrice d'impression contre la face correspondante de la paroi de séparation semi-traitée et en les pressant ensemble ;
durcir la paroi de séparation semi-traitée afin d'obtenir une paroi de séparation (3) avec au moins une parmi une première face (3a) et une deuxième face (3b} ayant une surface texturée (10) ;
relier ladite paroi de séparation (3) à un cadre périphérique (4) en matériau rigide de manière à définir la plaque de filtre-presse (1) ;
la matrice d'impression étant une feuille textile.

2. Procédé selon la revendication 1, dans lequel l'étape d'impression d'une surface texturée et l'étape de durcissement de la paroi de séparation semi-traitée sont simultanées.

3. Procédé selon l'une des revendications précédentes, dans lequel lesdites étapes d'impression d'une surface texturée et de durcissement de la paroi de séparation semi-traitée sont réalisées en plaçant la paroi de séparation semi-traitée dans une presse et/ou dans un autoclave.

4. Procédé selon l'une des revendications précédentes, dans lequel deux matrices d'impression sont prévues, les matrices d'impression étant placées contre les deux faces de la paroi de séparation semi-traitée lors de l'étape d'impression d'une surface texturée.

5. Procédé selon les revendications 1 à 3, dans lequel une seule face est imprimée lors de l'étape d'impression d'une surface texturée, le procédé comprenant en outre une étape d'assemblage de deux parois de séparation (3) dos à dos avec leurs surfaces texturées tournées vers l'extérieur avant de les lier à un cadre périphérique (4) afin de définir la plaque de filtre-presse.

6. Plaque de filtre-presse (1) adaptée pour être interposée lors de l'utilisation entre des plaques adjacentes d'un paquet de plaques définissant, avec lesdites plaques, une chambre filtrante amont et une chambre filtrante aval ; ladite plaque de filtre-presse (1) comprenant une paroi de séparation (3) reliée à un cadre périphérique (4) faite en un matériau rigide ; ladite paroi de séparation (3) comprend une feuille en un matériau de renforcement revêtue des deux côtés d'un matériau élastomère ; au moins une face de la paroi de séparation (3) a une surface texturée ; ladite surface texturée est obtenue en pressant une matrice d'impression qui est une feuille textile contre la face correspondante de la paroi de séparation (3) semi-traitée et en durcissant la paroi de séparation (3) semi-traitée.

7. Plaque (1) selon la revendication 6, dans laquelle ladite surface texturée (10) a une dimension fractale, mesurée selon la définition de Hausdorff, supérieure à 2 et inférieure à 3.

8. Plaque (1) selon l'une des revendications 6 ou 7, dans laquelle ladite surface texturée (10) présente des premières rainures principales (11) et des deuxièmes rainures principales (12), venant en intersection les unes avec les autres de manière à isoler des saillies (13).

9. Plaque (1) selon la revendication 8, dans laquelle au moins certaines desdites première ou deuxième rainures principales (11, 12) ont une surface intérieure segmentée de manière supplémentaire afin de définir des rainures secondaires (14).

10. Plaque (1) selon la revendication 9, dans laquelle lesdites rainures secondaires (14) ont la même forme, à l'échelle, que les rainures principales (11, 12) respectives.
